(19) Europäisches Patentamt
European Patent Office
Office européen des brevets

(11) **EP 2 707 587 B1**

(12) **EUROPÄISCHE PATENTSCHRIFT**

(45) Veröffentlichungstag und Bekanntmachung des Hinweises auf die Patenterteilung:
**01.04.2015 Patentblatt 2015/14**

(21) Anmeldenummer: **12720173.9**

(22) Anmeldetag: **09.05.2012**

(51) Int Cl.:
*F02D 41/24* *(2006.01)*   *H01F 7/18* *(2006.01)*

(86) Internationale Anmeldenummer:
**PCT/EP2012/058553**

(87) Internationale Veröffentlichungsnummer:
**WO 2012/152835 (15.11.2012 Gazette 2012/46)**

(54) **VERFAHREN UND VORRICHTUNG ZUM ERKENNEN EINES SCHLIESSZEITPUNKTES EINES EINEN SPULENANTRIEB AUFWEISENDEN VENTILS**

METHOD AND APPARATUS FOR DETECTING A CLOSING TIME POINT OF A VALVE HAVING A COIL DRIVE

PROCÉDÉ ET DISPOSITIF DE DÉTECTION DU MOMENT DE FERMETURE D'UNE SOUPAPE COMMANDE PAR BOBINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2011 DE 102011075521**

(43) Veröffentlichungstag der Anmeldung:
**19.03.2014 Patentblatt 2014/12**

(73) Patentinhaber: **Continental Automotive GmbH 30165 Hannover (DE)**

(72) Erfinder: **GÖRZEN, Johann 86447 Aindling (DE)**

(56) Entgegenhaltungen:
EP-A1- 2 514 956   DE-A1-102008 006 706
DE-A1-102008 041 528   DE-A1-102009 027 311
DE-A1-102009 032 521   DE-C1- 10 108 425

**Beschreibung**

Die Erfindung betrifft ein Verfahren zum Erkennen eines Schließzeitpunktes eines einen Spulenantrieb aufweisenden Ventils und ein entsprechendes Ventil. Ein solches Ventil weist ein bewegliches Ventilglied und einen Ventilsitz auf, welche zum Öffnen und Schließen des Ventils zusammenwirken. Der Spulenantrieb umfasst einen unbeweglichen elektromagnetischen Stator mit einer Erregerspule und einen beweglichen Anker, welcher in einer Ruheposition von dem Stator beabstandet ist, und welcher mit dem beweglichen Ventilglied derart gekoppelt ist, dass er bei einem Ankerhub ein Öffnen des Ventils bewirkt, indem er das Ventilglied aus dem Ventilsitz hebt.

Ein gattungsgemäßes Verfahren umfasst ein zeitlich begrenztes Einprägen einer elektrischen Spannung in die Erregerspule zur Erzeugung eines Erregerstromes durch diese, wodurch der bewegliche Anker unter Bildung eines Ankerhubes angezogen wird und das Ventilglied aus seinem Ventilsitz hebt, ein Abklingen lassen des Erregerstromes auf Null, und danach ein Abtasten und Auslesen des Spannungsverlaufs an der Erregerspule über die Zeit.

Derartige Verfahren kommen beispielsweise zum Einsatz bei der Schließzeitpunktbestimmung von Einspritzventilen für Brennkraftmaschinen. Für eine Regelung der pro Einspritzvorgang eingespritzten Kraftstoffmenge ist die Kenntnis der Dauer der Ventilöffnung und somit des Schließzeitpunktes des Ventils eine wichtige Messgröße. Der Schließzeitpunkt eines Ventils kann beispielsweise abhängig von der Temperatur, dem Alterungszustand des Ventils, dem Druck des durch das Ventil fließenden Fluids oder Gases und der Durchflussmenge abhängen. Dadurch können Ungenauigkeiten bei der Fluiddosierung auftreten. Um diese Einflüsse durch eine übergeordnete Regelungseinheit zu korrigieren ist im Betrieb eine Überwachung des Schließzeitpunktes notwendig.

Bei bekannten Einspritzventilen z.B. für Common-Rail Systeme ruht das Ventilglied in Form einer Düsennadel bei geschlossenem Ventil in einem Ventilsitz und unterbindet dadurch einen Fluss von unter Druck stehendem, flüssigem, gasförmigem oder flüssiggasförmigem Kraftstoff in den Brennraum einer Brennkraftmaschine. Zum Öffnen des Ventils wird das Ventilglied unter der Kraftwirkung eines Aktors und des anliegenden Kraftstoffdruckes entgegen einer Federkraft einer Ventilfeder aus dem Ventilsitz gehoben. Somit kann Kraftstoff zwischen dem Ventilglied und dem Ventilsitz durchströmen. Der Aktor ist dabei beispielsweise ein Spulenantrieb mit einem beweglichen Anker, der durch einen Ankerhub die nötige Kraft auf das Ventilglied ausübt.

Zum Schließen des Ventils wird das Ventilglied unter der Kraftwirkung des anliegenden Kraftstoffdrucks und der Ventilfeder wieder in seinen Ventilsitz gedrückt und das Ventil somit geschlossen. Dafür ist im Allgemeinen keine Krafteinwirkung durch den Aktor auf das Ventilglied notwendig. Es ist daher in der Regel ausreichend, zum Schließen des Ventils das Einprägen einer Spannung in die Erregerspule zu beenden, so dass nach einer Abklingzeit der Erregerstrom in der Spule auf Null zurückgeht und entsprechend die magnetische Anziehung auf den beweglichen Anker nachlässt. In Folge kann dieser in seine Ruheposition zurückfallen. Der Stromabbau kann auch durch eine Gegenspannung beschleunigt werden.

Bei Systemen, in denen der Anker fest mit dem Ventilglied gekoppelt ist, prallt dieser beim Zurückfallen gleichzeitig mit dem Ventilglied zurück in seine Ruheposition. Bei anderen Varianten, in denen der Anker nicht fest mit dem Ventilglied gekoppelt ist, kann der Anker in seiner Ruheposition frei ausschwingen, während das Ventilglied in seinen Sitz prallt.

Nach dem Abfallen des Erregerstromes in der Spule auf Null ist an der Spule eine charakteristische Klemmenspannung messbar, die sogenannte Abklingspannung. Diese beruht auf einer Selbstinduktion in der Spule aufgrund der Magnetfeldänderung durch den abfallenden Erregerstrom sowie durch in dem beweglichen Anker induzierte Wirbelströme. Bei idealen Systemen ist zum Zeitpunkt, der dem Zurückfallen des Ankers in seine Ruheposition entspricht, in dem Verlauf der Abklingspannung ein charakteristischer Knick zu beobachten. Dieser Zeitpunkt entspricht wiederum dem Schließzeitpunkt des Ventils, wobei der Zeitpunkt gegebenenfalls mit einem systemabhängigen konstanten Offset behaftet ist.

Bekannte Methoden zur Erfassung des Schließzeitpunktes nutzen daher einen Vergleich der gemessenen Abklingspannung mit einem Referenzspannungsverlauf oder deren Ableitungen nach der Zeit. Aus der Abweichung der beiden Spannungsverläufe kann dann der Schließzeitpunkt gefunden werden.

Bei realen Systemen ist der Verlauf der Abklingspannung jedoch häufig mit einem starken Rauschen behaftet, welches durch eine Ableitung noch verstärkt wird. Bei Systemen mit frei ausschwingendem Anker ist der charakteristische Knick darüber hinaus nur sehr schwach ausgeprägt und mit den bekannten Methoden praktisch nicht mehr zu erkennen. Eine zuverlässige Erkennung des Schließzeitpunktes ist daher bei solchen Systemen mit den bekannten Methoden im Allgemeinen nicht möglich.

Der Erfindung liegt daher die Aufgabe zugrunde, ein verbessertes Verfahren sowie ein Ventil anzugeben, mit welchem sich der Schließzeitpunkt des Ventils (auch bei starkem Rauschen und frei ausschweingendem Anker) zuverlässig erkennen lässt.

Die Aufgabe wird gelöst mit dem Verfahren gemäß dem unabhängigen Verfahrensanspruch sowie durch ein Ventil gemäß dem unabhängigen Sachanspruch. Vorteilhafte Varianten und Weiterbildungen der Erfindung sind in den abhängigen Ansprüchen angegeben.

Das erfindungsgemäße Verfahren eignet sich zum Erkennen eines Schließzeitpunktes eines einen Spulenantrieb aufweisenden Ventils. Das Ventil weist ein bewegliches Ventilglied und einen Ventilsitz auf, welche zum Öffnen und Schließen des Ventils zusammenwirken. Der Spulenantrieb umfasst einen unbeweglichen elektromagnetischen Stator mit einer Erregerspule und einen beweglichen Anker, welcher in einer Ruheposition von dem Stator beabstandet ist. Der Anker ist mit dem beweglichen Ventilglied derart gekoppelt, dass er bei einem Ankerhub ein Öffnen des Ventils bewirkt, indem er das Ventilglied aus dem Ventilsitz hebt. Alternativ könnte sich die Spule auch in dem beweglichen Teil des Spulenantriebs befinden. In diesem Fall wäre der Anker (ohne Spule) im Antrieb unbeweglich und der Stator mit Spule als bewegliches Teil ausgestaltet, welches in seiner Bewegung mit dem Ventilglied gekoppelt ist. Dies ist aber nicht üblich.

Gemäß dem erfindungsgemäßen Verfahren wird zeitlich begrenzt eine elektrische Spannung in die Erregerspule eingeprägt, wodurch ein Erregerstrom durch diese erzeugt wird. Unter Wirkung des daraus resultierenden Magnetfeldes wird der bewegliche Anker von dem Stator angezogen. Die Bewegung des Ankers aus seiner Ruheposition in Richtung des Stators wird als Ankerhub bezeichnet. Aufgrund der Koppelung des Ankers mit dem Ventilglied nimmt der Anker das Ventilglied bei dieser Bewegung mit, bzw. überträgt der Anker eine Kraftwirkung auf das Ventilglied, so dass das Ventilglied aus seinem Ventilsitz gehoben wird. Nach dem zeitlich begrenzten Einprägen einer Spannung in die Erregerspule klingt der Erregerstrom in der Spule wieder ab. Dieser Stromabbau kann zusätzlich durch Einprägen einer Gegenspannung in die Spule beschleunigt werden. Nachdem der Erregerstrom in der Spule wieder auf Null abgeklungen ist, wird der Spannungsverlauf $(U(t))$ an der Erregerspule über die Zeit abgetastet und in Form von Wertepaaren $(t(k); U(k))$ mit jeweils einem Zeitwert $(t(k))$ und einem Spannungswert $(U(k))$ ausgelesen. (Jedes $k \in \mathbb{N}$ repräsentiert dabei einen diskreten Messpunkt.)

Erfindungsgemäß werden anschließend die erfassten Spannungswerte und Zeitwerte mit Hilfe einer Recheneinheit durch Logarithmusbildung $x(k):=\log_b t(k)$ und $y(k):=c \cdot \log_b U(k)$ mit einer Basis b und einer Konstante c transformiert. Daraus wird eine transformierte Funktion $y(x)$ mit Wertepaaren $(x(k); y(k))$ erzeugt. Diese transformierte Funktion wird anschließend unter Bildung einer Ableitungsfunktion

$$\delta(x) := \frac{\Delta y(x)}{\Delta x} = \frac{y(k) - y(k-1)}{x(k) - x(k-1)}$$ numerisch

differenziert. Anhand der so erhaltenen Ableitungsfunktion wird schließlich ein dem Schließzeitpunkt $t_{close}$ des Ventils entsprechender transformierter Zeitwert $x_{close}$ erkannt, wobei die Ableitungsfunktion am Punkt $x_{close}$ einen vorbestimmten Schwellwert $S(x)$ unterschreitet $\delta(x_{close}) \leq S(x)$, bzw. diesen annimmt. Aus diesem so gewonnenen transformierten Zeitwert wird schließlich der Schließzeitpunkt $t_{close}$ durch Rücktransformation $t_{close} = b^{x_{daw}}$ berechnet. $x_{close}$ kann auch zwischen zwei diskret abgetasteten Werten $x(k_1)$ und $x(k_1+1)$ liegen.

Das erfindungsgemäße Verfahren zur Erkennung des Schließzeitpunktes bietet gegenüber den bekannten Verfahren den Vorteil, dass es sowohl für Systeme mit einem hart aufprallenden Anker als auch für Systeme mit frei ausschwingendem Anker geeignet ist, insbesondere aber für Systeme mit schwach ausgeprägtem Knick.

Durch Transformation des gemessenen Spannungsverlaufes auf eine doppellogarithmische Skala und anschließende Differentiation kann der Schließzeitpunkt auch ohne erkennbaren Knick im Verlauf der Abklingspannung erkannt werden.

Der Schwellwert wird vorzugsweise durch Referenzmessungen zuvor festgelegt. Bei Systemen mit fest aufsitzendem Anker ist der charakteristischer Knick im Verlauf der Abklingspannung durch eine unterschiedlichen Steigung vor und nach dem Knick erkennbar. Der Schwellwert liegt dann idealerweise in der Mitte zwischen den beiden Steigungen. Der Schwellwert kann als Funktion $S(x)$ veränderliche festgelegt werden. Vorzugsweise ist der Schwellwert S jedoch konstant.

Durch die Festlegung des Schwellwertes wird auch die systematische Abweichung (Offset) bei der Bestimmung des tatsächlichen Schließzeitpunktes zu einem wesentlichen Anteil mitbestimmt. Da eine daraus resultierende Abweichung jedoch in der Regel eine systemabhängige Konstante ist, kann deren Einfluss durch die Ansteuerung des Ventils kompensiert werden.

Die Basis der logarithmischen Transformation kann beispielsweise die Zahl 10 oder auch eine andere Zahl sein. Vor der logarithmischen Transformation werden die gemessenen Spannungs- und Zeitwerte vorzugsweise durch die Zeit- bzw. Spannungseinheiten geteilt um dimensionslose Werte zu erhalten. Dies wird bei der Rücktransformation des ermittelten Schließzeitpunktes wieder rückgängig gemacht. Die transformierte Funktion $y(x)$ kann mit einer beliebigen Konstanten c multipliziert werden. Beispielsweise kann die Funktion auf diese Weise normiert werden.

Gemäß einer bevorzugten Variante des Verfahrens werden die Wertepaare $(t(k); U(k))$ mit jeweils einem Spannungswert und einem Zeitwert durch ein Oversampling-Verfahren ermittelt. Das heißt, dass bei der Abtastung jeweils über eine bestimmte Anzahl von Werten gemittelt wird. Das Oversampling-Verfahren ist auf dem Gebiet der Signalverarbeitung allgemein bekannt und soll daher hier nicht näher beschrieben werden. Durch Anwendung des Oversamplings bei der Abtastung des Spannungsverlaufes $(t(k); U(k))$ kann der Einfluss des Rauschens noch stärker reduziert werden.

Es ist alternativ gemäß einer andere Variante des Verfahrens auch möglich, die Wertepaare $(x(k); y(k))$ der transformierten Funktion $y(x)$ durch ein Oversampling-Verfahren zu ermitteln. Aus einer größeren Anzahl von Spannungs-Zeit-Wertepaaren (t(k);U(k)) wird durch ein Mittelungsverfahren eine geringere Anzahl von transformierten Wertepaaren (x(k);y(k)) gebildet. Auch damit kann der Einfluss des Rauschens vorteilhaft reduziert werden.

In rauscharmen Systemen kann gegebenenfalls auf ein Oversampling-Verfahren verzichtet werden. Alternativ zum Oversampling kann bei dem erfindungsgemäßen Verfahren außerdem auch ein Tiefpassfilter eingesetzt werden, um den Einfluß des Rauschens zu reduzieren. Dieser reduziert jedoch im Allgemeinen auch das charakteristische Knicksignal.

Das erfindungsgemäße Verfahren ist besonders geeignet für Systeme mit frei ausschwingendem Anker. Gemäß einer bevorzugten Variante des Verfahrens weist daher der Spulenantrieb des Ventils einen beweglichen Anker auf, welcher beim Zurückfallen in seine Ruheposition ausschwingen kann.

Gemäß einer anderen Variante des Verfahrens ist der bewegliche Anker des Ventils dagegen fest mit dem Ventilelement gekoppelt und schlägt beim Zurückfallen in seine Ruheposition fest auf, während das Ventilelement in seinen Ventilsitz fällt.

Wie oben beschrieben, beruht der charakteristische Verlauf der Abklingspannung auf der Selbstinduktion in der Spule und der Induktion aufgrund von in dem bewegten Anker und dem festem Stator auftretenden Wirbelströmen. In einer weiteren vorteilhaften Ausführungsvariante des Verfahrens weist der bewegliche Anker und/oder der feste Stator Kurzschlussringe auf, welche die Ausbildung von Wirbelströmen unterstützen. Solche Kurzschlussringe können durch in sich geschlossene Bahnen eines leitfähigen Materials wie z.B. Kupfer oder Legierungen mit einer im Vergleich zum Anker- bzw. Statormaterial hohen Leitfähigkeit im Anker bzw. Stator gebildet sein.

Ein weiterer unabhängiger Gegenstand der Erfindung ist ein Ventil mit einem Spulenantrieb und einer Steuerungs- bzw. Recheneinheit, welches alle Komponenten zur Ausführung des erfindungsgemäßen Verfahrens aufweist. Insbesondere weist das erfindungsgemäße Ventil die bereits im Zusammenhang mit dem erfindungsgemäßen Verfahren beschriebenen Komponenten auf.

Das erfindungsgemäße Ventil ist vorzugsweise ein Einspritzventil für eine Brennkraftmaschine, z.B. in einem Common-Rail System.

Zur Durchführung der Abtastung und Auswertung des Spannungverlaufes an der Erregerspule weist das erfindungsgemäße Ventil vorzugsweise eine Regelungseinheit und eine Auswerteeinheit auf. In einer bevorzugten Weiterbildung sind die Regelungs- und die Auswerteeinheit in einer Einheit zusammengefasst. Das Ventil weist insbesondere Mittel zum zeitlich begrenzten Einprägen einer Spannung in die Erregerspule und vorzugsweise auch Mittel zum Einprägen einer Gegenspannung in diese auf. Damit kann das Abklingen des Erregerstromes in der Spule beschleunigt werden. Sowohl für die Einprägung der Spannung in die Erregerspule als auch für die Abtastung und Auslesung der Abklingspannung und Auswertung der Abklingspannung können vorteilhaft vorhandene Steuereinrichtungen verwendet werden.

Beispielsweise werden Einspritzventile für Brennkraftmaschinen zur Steuerung der eingespritzten Kraftstoffmenge und Einspritzdauer durch Regelungseinheiten angesteuert. Diese können vorteilhaft auch für die Durchführung des erfindungsgemäßen Verfahrens verwendet werden. Das erfindungsgemäße Verfahren bietet daher den zusätzlichen Vorteil, dass es keine zusätzlichen teuren Komponenten erfordert.

Im Folgenden soll die Erfindung anhand den Figuren 1 bis 5 näher erläutert werden.

Es zeigen schematisch:

Figur 1: einen Spulenantrieb für ein Ventil;

Figur 2: den charakteristischen Verlauf von Spannung und Strom an der Erregerspule und der Ankerbewegung während eines Ventilöffnungszyklus;

Figur 3: Verlauf der Abklingspannung und normierter Verlauf der Abklingspannung;

Figur 4: Ideale Darstellung der Ankerbewegung 1(t), des Verlaufs der Abklingspannung U (t), der transformierten Funktion y(x), und der abgeleiteten Funktion·δ(x) im Vergleich für ein System mit hart aufsetzenden Anker und für einen frei ausschwingenden Anker;

Figur 5: Darstellung wie in Figur 4 für ein reales System mit Signalrauschen und mittels Oversampling gewonnener Ableitungsfunktion δ(x).

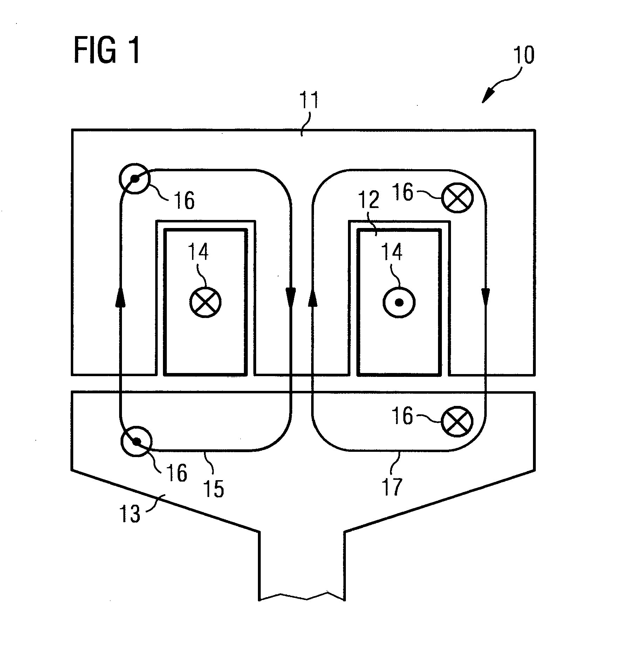

Figur 1 zeigt schematisch einen Spulenantrieb 10 für ein Ventil mit einem ortsfesten Stator 11 mit einer Erregerspule 12 und einem beweglichen Anker 13. Der Anker 13 ist in seiner Ruheposition von dem Stator beabstandet. Wenn in der Erregerspule eine Spannung eingeprägt wird, wird darin ein Erregerstromfluss 14 erzeugt. Dadurch baut sich ein magnetisches Hauptfeld 15 auf. Dieses bewirkt ein Anziehen des beweglichen Ankers 13 in Richtung zu dem Stator 11. Dem Aufbau des Hauptmagnetfeldes wirkt nach der Lenz'schen Regel ein Wirbelstrom 16 und ein dadurch erzeugtes Magnetfeld 17 entgegen bis der Wirbelstrom 16 abgeklungen ist.

Üblicherweise wählt man einen höheren Erregerstrom 14 als erforderlich und erreicht damit ein weitgehend reproduzierbares Anziehen des Ankers 13.

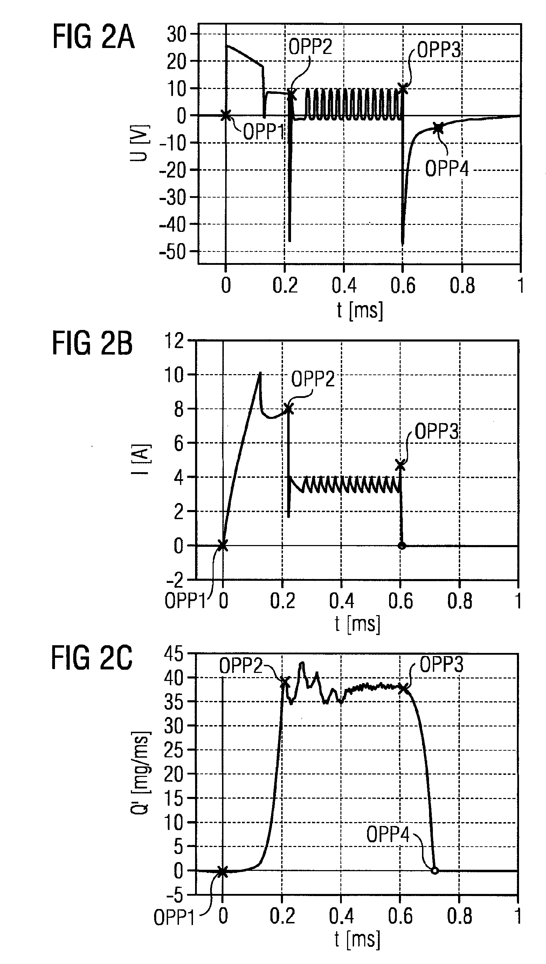

Figur 2 zeigt die wichtigsten Zustände des Elektromagneten 10 während eines Ventilöffnungszyklus. In Figur 2A) ist die Klemmenspannung an der Erregerspule dargestellt. Am Punkt OPP1 (zum Zeitpunkt t=0) wird eine Ventilöffnung gestartet indem eine Spannung U in die Erregerspule eingeprägt wird. Diese erzeugt einen Stromfluss I in der Erregerspule, dargestellt in Fig. 2B). Der Anker wird unter Wirkung des sich aufbauenden Magnetfeldes angezogen Figur 2C) und hebt das Ventilglied aus seinem Sitz. Zum Punkt OPP2 ist das Ventil ganz geöffnet und der Anker angezogen. Nach der gewünschten Dauer wird am Punkt OPP3 mit dem Schließen des Ventils begonnen. Es wird eine Gegenspannung in die Erregerspule 12 eingeprägt. Der Erregerstrom I fällt danach auf Null ab und das Hauptmagnetfeld baut sich ab. Wegen des sich abbauenden Hauptmagnetfeldes fällt der Anker zurück in seine Ruheposition. Aufgrund der Selbstinduktion in der Erregerspule und aufgrund der Wirbelströme in dem sich bewegenden Anker ist an der Erregerspule während dieser Zeit eine Klemmenspannung messbar. Diese wird in dieser Anmeldung als Abklingspannung oder Freilaufspannung bezeichnet. In Punkt OPP4 erreicht der Anker seine Ruheposition. An dieser Stelle ist eine charakteristische Veränderung im Spannungsverlauf zu beobachten. Im Folgenden wird nur der Zeitraum zwischen OPP3 und OPP4 betrachtet.

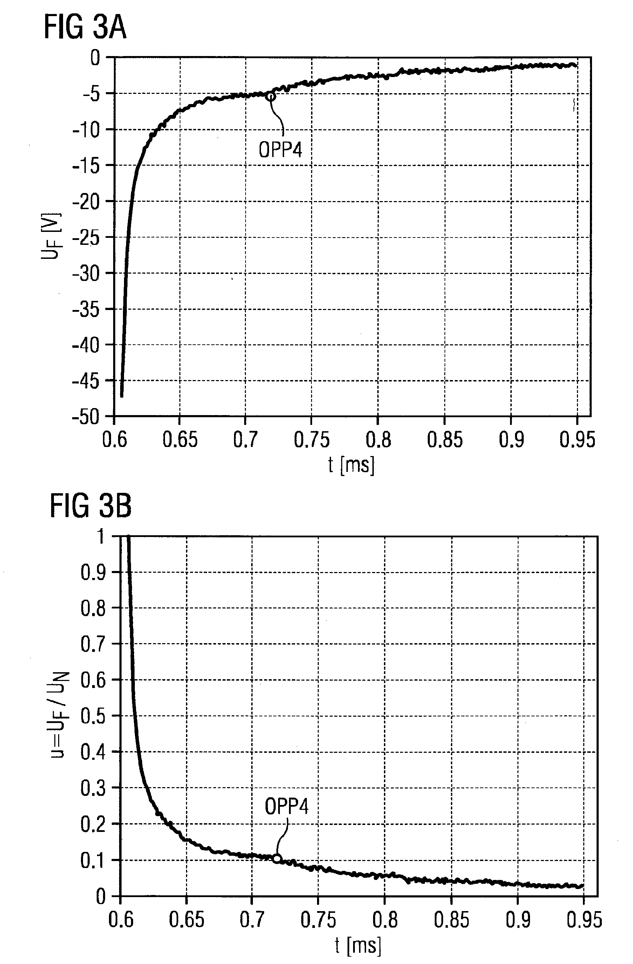

Figur 3 A) zeigt den Verlauf der Abklingspannung zwischen den Betriebspunkten OPP3 und OPP4 in einem vergrößerten Ausschnitt. Die Spannungswerte sind hier negativ. Die absoluten Spannungswerte sind hierbei jedoch nicht von Interesse. Zur Auswertung des Spannungsverlaufes ist nur der normierte Verlauf entscheidend. Figur 3 B) zeigt den Spannungsverlauf aus Figur 3A) in normierter Darstellung. Der Schließzeitpunkt des Ventils am Betriebspunkt OPP4 ist in beiden Darstellungen an einem kleinen Knick im Spannungsverlauf zu erkennen.

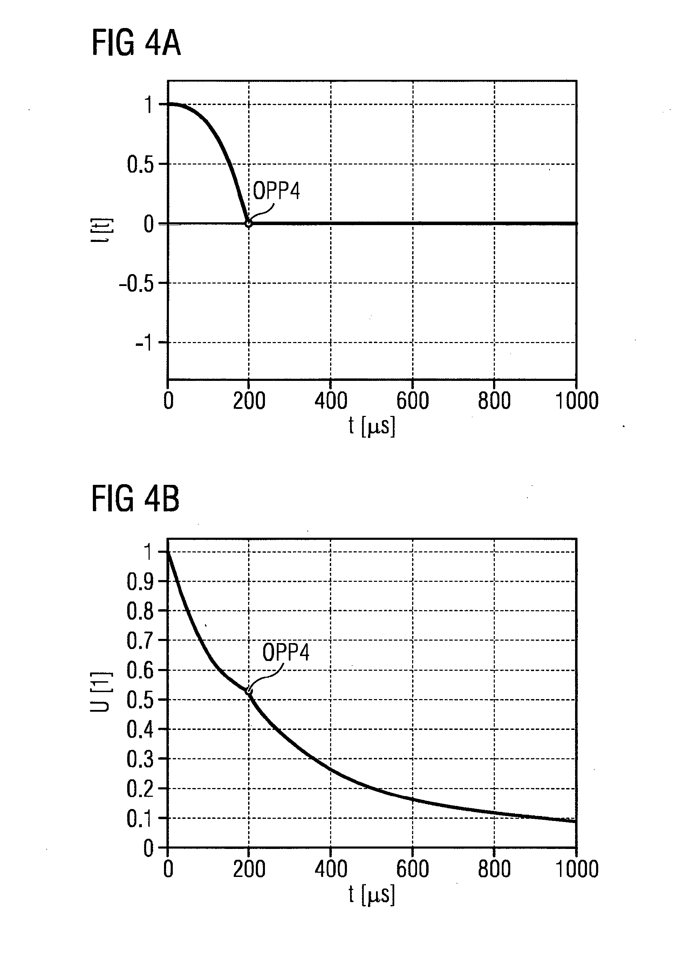

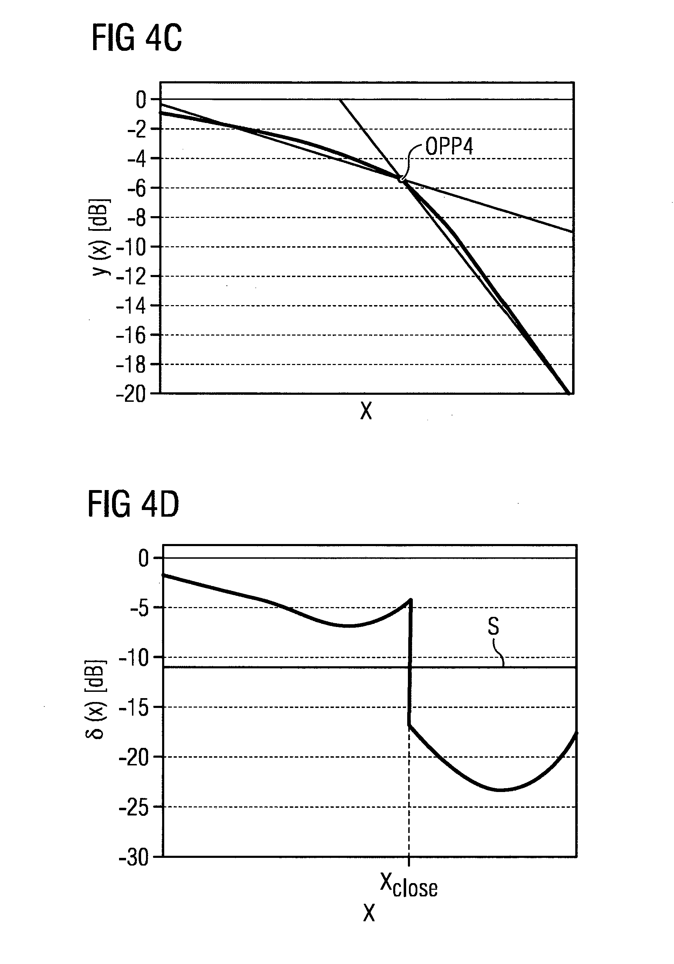

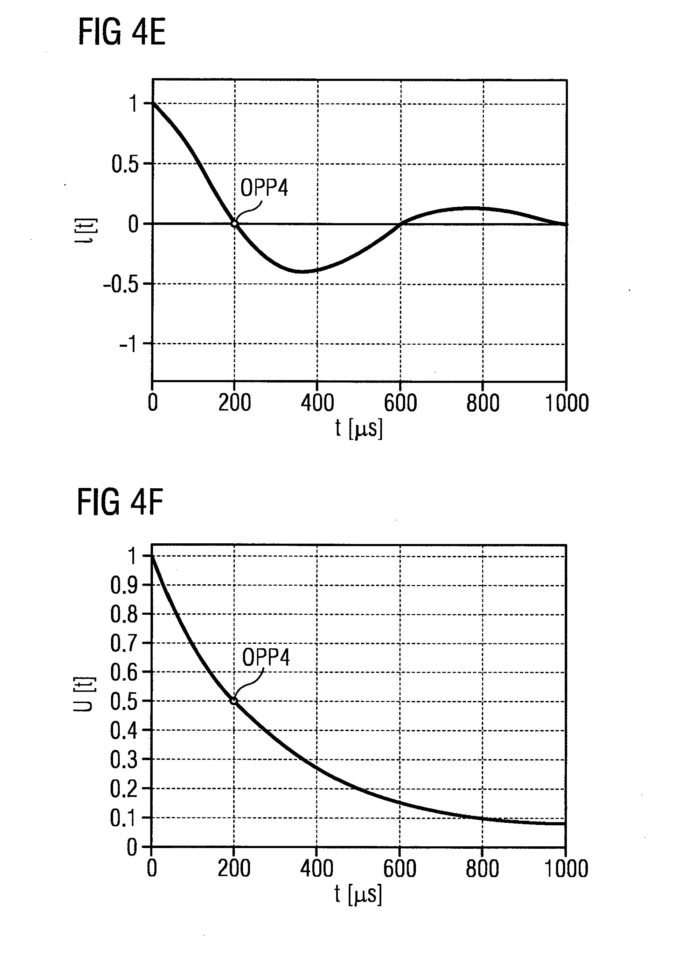

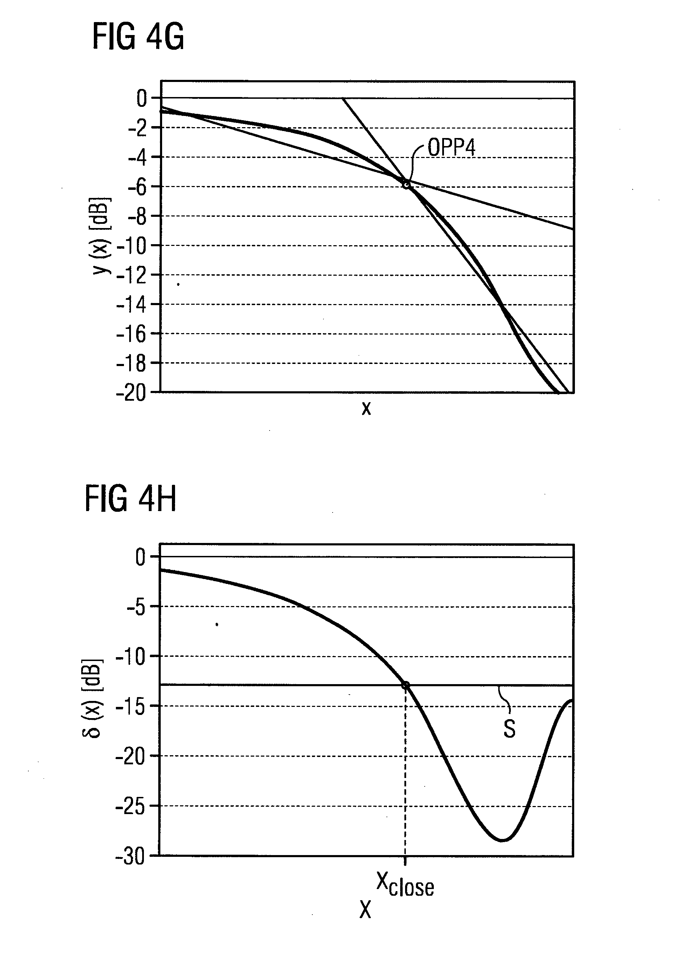

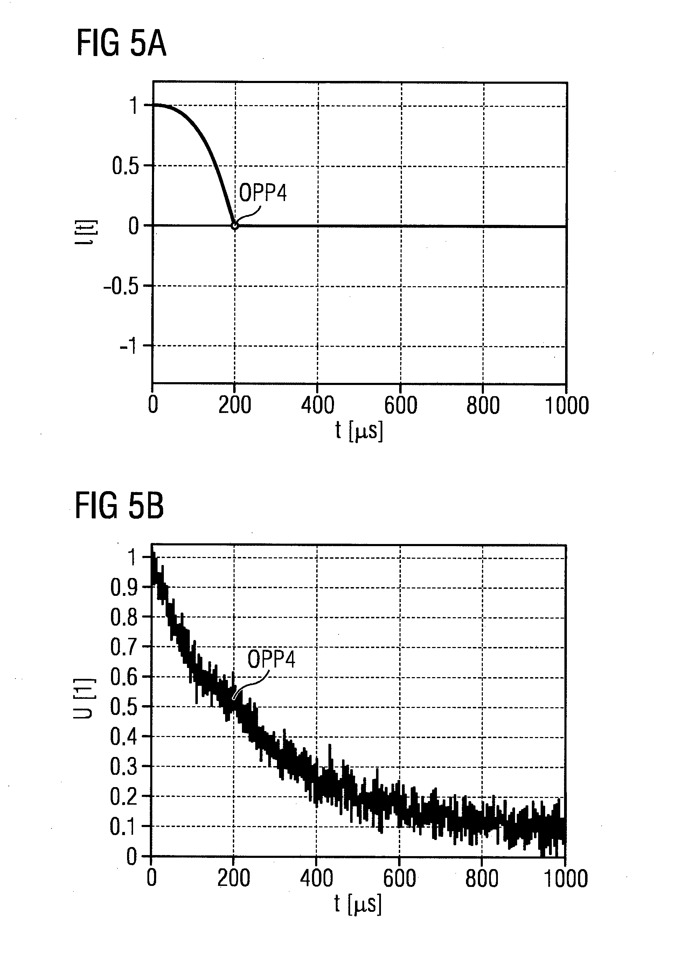

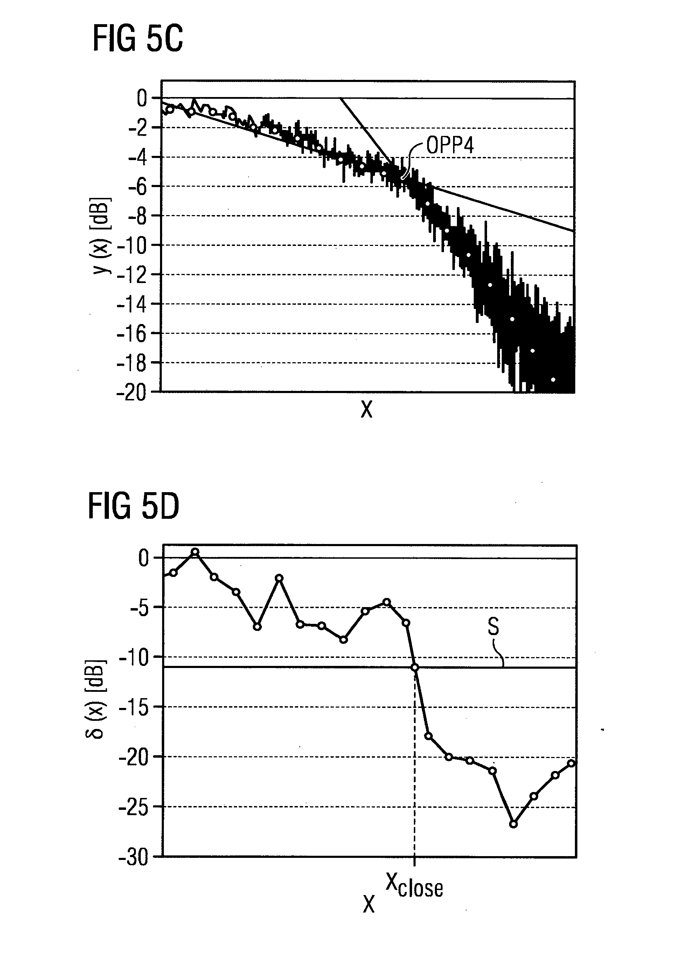

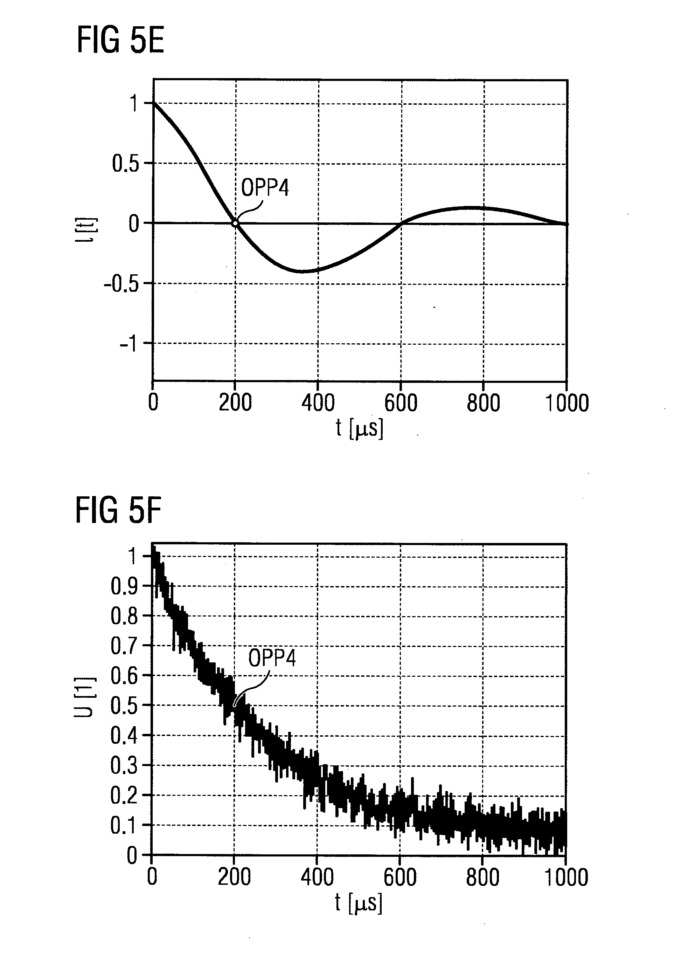

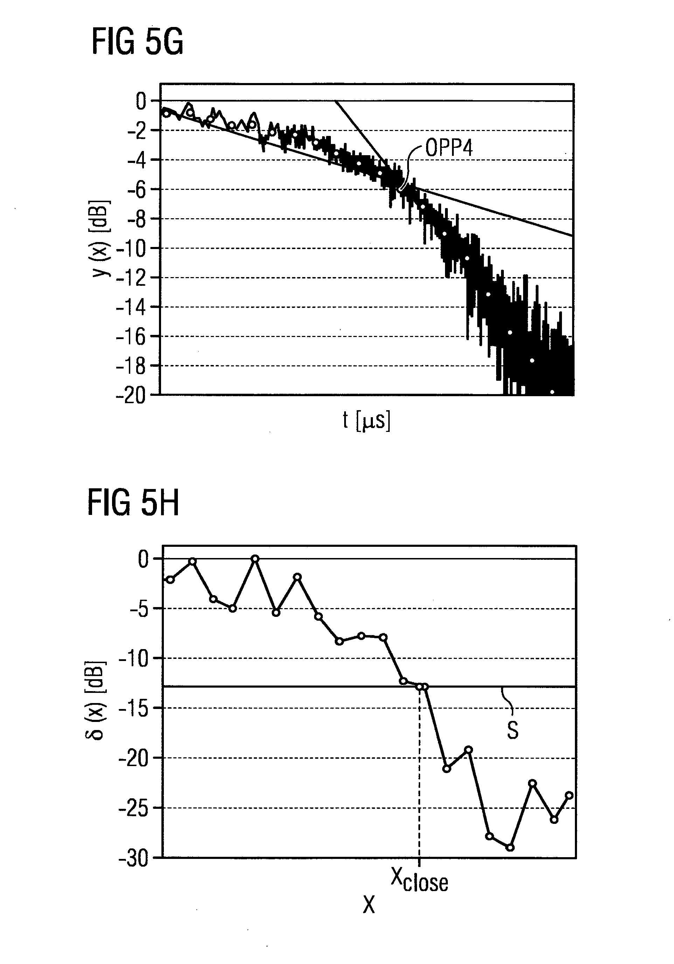

Die Ankerbewegung 1(t) ist in Figur 4A) für einen fest aufsetzenden Anker und in Figur 4E) für einen frei ausschwingenden Anker normiert dargestellt. In den Figuren 4 und 5 betreffen die Teilfiguren A) bis D) jeweils ein System mit fest aufsetzendem Anker und die Figuren E) bis H) betreffen jeweils ein System mit frei ausschwingendem Anker.

Die gleichzeitig an der Erregerspule meßbare Abklingspannung U ist ins den Figuren 4B) und 4F) normiert dargestellt. Bei dem System mit fest aufsitzendem Anker ist der Schließzeitpunkt deutlich an dem Knick in dem Spannungsverlauf am Betriebspunkt OPP4 zu erkennen. Bei dem System mit frei ausschwingendem Anker dagegen (Fig. 4F) hebt sich der Schließzeitpunkt am Betriebspunkt OPP4 nicht mehr sichtbar von dem übrigen Verlauf der Abklingspannung ab.

In Figuren 4C) und 4G) sind jeweils die transformierten Funktionen y(x) der Abklingspannung aufgetragen. Die Werte (x(k); y(k)) sind aus den gemessenen Spannungs-Zeit-Wertepaaren (t(k);U(k)) durch Logarithmieren gewonnen. Bei der Transformation der Spannungswerte U(k) wurde der Logarithmus zur Basis b=10 gebildet und mit dem konstanten Faktor c=20 multipliziert. Demnach sind die transformierten Spannungswerte y (k) hier in der Einheit Dezibel [dB] dargestellt. In dem System mit fest aufsitzendem Anker (Fig. 4C) ist der Punkt OPP4 deutlich an einem Wechsel der Steigung zu erkennen. Vor und nach dem Schließzeitpunkt lässt sich der transformierte Verlauf der Abklingspannung jeweils gut durch Geraden mit unterschiedlichen Steigungen annähern. In dem System mit frei ausschwingendem Anker (Fig. 4G) lässt sich die transformierte Kurve vor und nach dem Schließzeitpunkt am Punkt OPP4 ebenfalls durch Geraden annähern. Diese können jedoch nur eine gemittelte Steigung wiedergeben und sind wesentlich weniger eindeutig erkennbar.

Figuren 4D) und 4H) zeigen jeweils die abgeleitete Funktion $\delta(x)$ der transformierten Funktion y(x). Bei dem System mit fest aufsitzendem Anker (Fig. 4D) ist ein sprunghafter Abfall der Steigung d.h. des Betrages der Ableitungsfunktion erkennbar. An diesem Punkt $x_{close}$ unterschreitet die Ableitungsfnktion den vorbestimmten Schwellwert S und dieser Punkt $x_{close}$ entspricht somit dem gesuchten Schließzeitpunkt des Ventils. Aus dem transformierten Schließzeitpunkt $x_{close}$ wird der Schließzeitpunkt schließlich durch Rücktransformation gebildet.

Der Schwellwert S(x) wurde vorzugsweise zuvor anhand von Referenzmessungen so bestimmt, dass er in etwa in der Mitte zwischen der mittleren Steigung vor dem Punkt und der mittleren Steigung nach dem Punkt $x_{close}$ liegt. Prinzipiell könnte der Schwellwert S auch durch ein automatisches Verfahren ermittelt und als veränderliche Funktion S(x) nachgeführt werden. Vorzugsweise ist die Schwelle S(x) jedoch, wie hier dargestellt, eine konstante Schwelle S.

Bei dem System mit frei ausschwingendem Anker (Fig. 4H) ist der dem Schließzeitpunkt entsprechende transformierte Zeitpunkt $x_{close}$ ebenfalls an der Unterschreitung des vorbestimmten Schwellwertes S erkennbar. Hierfür wird der Schwellwert S vorzugsweise ebenfalls zuvor anhand von Referenzmessungen festgelegt. Bei diesem System reagiert der ermittelte transformierte Zeitpunkt $x_{close}$ wesentlich stärker auf die Festlegung des Schwellwertes, da kein sprunghafter Abfall der Steigung zu beobachten ist. Durch die Festleguung des Schwellwertes wird somit auch die systematische Abweichung (Offset) bei der Bestimmung des Schließzeitpunktes festgelegt.

Figur 5 zeigt die entsprechenden Kurven aus Figur 4 für ein reales System mit rauschbehafteten Signalen für ein System mit fest aufsitzendem Anker (Fig. 5A - D) und ein System mit frei ausschwingendem Anker (Fig. 5E - H). Die einzelnen Kurven und Bezeichnungen entsprechen den in Figur 4 dargestellten. Auf Wiederholungen in der Erläuterung soll hier verzichtet werden.

Im Unterschied zu Figur 4 ist hier das Signal der Abklingspannung U deutlich mit einem Rauschen behaftet. So ist auch in dem System mit fest aufsitzendem Anker (Fig. 5B) der Betriebspunkt OPP4 nur noch sehr undeutlich zu erkennen. Auch die unterschiedlichen Steigungen vor und nach dem Punkt OPP4 in der transformierten Funktion y(x) sind hierbei nur noch undeutlich erkennbar.

Um den Einfluss des Rauschens bei der Bildung der Ableitung zu reduzieren, wurden hier aus den Wertepaaren (x(k); y(k)) der transformierten Funktion im Oversampling-Verfahren eine reduzierte Anzahl von Wertepaaren ermittelt. Diese sind als Punkte dargestellt und dienen als Basis für die numerische Ableitung der transformierten Funktion. Das Ergebnis der numerischen Ableitung - die Ableitungsfunktion $\delta(x)$ ist in den Figuren 5D) und 5H) dargestellt. Auch hier ist der dem Schließzeitpunkt entsprechende transformierte Zeitpunkt $x_{close}$ an der Unterschreitung des Schwellwertes S erkennbar.

Gemäß einer alternativen Variante können bereits die Spannungswerte U(t) in einem Oversampling Verfahren abgetastet werden. Auf diese Weise erhält man bereits zu Beginn weniger Spannungs-Zeit-Wertepaare, die danach transformiert werden müssen.

Somit ist mit dem erfindungsgemäßen Verfahren eine zuverlässige Erkennung des Schließzeitpunktes auch bei Systemen mit frei ausschwingendem Anker und mit verrauschten Signalen möglich.

**Patentansprüche**

1. Verfahren zum Erkennen eines Schließzeitpunktes eines einen Spulenantrieb (10) aufweisenden Ventils mit einem beweglichen Ventilglied welches zum Öffnen und Schließen des Ventils mit einem Ventilsitz zusammenwirkt, wobei der Spulenantrieb (10) umfasst:

   - einen elektromagnetischen Stator (11) mit einer Erregerspule (12)
   - und einen beweglichen Anker (13), welcher in einer Ruheposition von dem Stator (11) beabstandet ist, und mit dem beweglichen Ventilglied derart gekoppelt ist, dass er bei einem Ankerhub ein Öffnen des Ventils bewirkt, indem er das Ventilglied aus dem Ventilsitz hebt;
   mit den Schritten:
   - zeitlich begrenztes Einprägen einer elektrischen Spannung in die Erregerspule (12) zur Erzeugung eines Erregerstromes (14) durch diese, wodurch der bewegliche Anker (13) unter Bildung eines Ankerhubes angezogen wird und das Ventilglied aus seinem Ventilsitz hebt,
   - Abklingen lassen des Erregerstromes (14) auf Null,
   - danach Abtasten und Auslesen des Spannungsverlaufs (U(t)) an der Erregerspule (12) über die Zeit in Form von Wertepaaren (t(k); U(k)) mit jeweils einem Zeitwert (t(k)) und einem Spannungswert (U(k));
   - Transformieren der erfassten Spannungswerte und Zeitwerte durch Logarithmusbildung $x(k):=\log_b t(k)$ und $y(k):=c\cdot\log_b(U(k))$ mit einer Basis b und einer Konstante c zur Bildung einer transformierten Funktion y(x) mit Wertepaaren (x(k);y(k));
   - anschließend numerisches Ableiten der transformierten Funktion unter Bildung einer Ableitungsfunktion $\delta(x) := \dfrac{\Delta y(x)}{\Delta x};$
   - Erkennen eines dem Schließzeitpunkt $t_{close}$ des Ventils entsprechenden transformierten Zeitwertes $x_{close}$ anhand der Ableitungsfunktion an einer Unterschreitung $\delta(x_{close}) \leq S(x)$ eines vorbestimmten Schwellwerts S(x);
   - Berechnung des Schließzeitpunktes $t_{close}$ durch Rücktransformation $t_{close} = b^{x_{dew}}$.

2. Verfahren gemäß Anspruch 1, wobei die Wertepaare (t(k);U(k)) mit jeweils einem Spannungswert (U(k)) und einem Zeitwert (t(k)) durch ein Oversampling-Verfahren ermittelt werden.

3. Verfahren gemäß Anspruch 1, wobei die Wertepaare (x(k); y(k)) der transformierten Funktion y(x) durch ein Oversampling-Verfahren ermittelt werden.

4. Verfahren gemäß einem der vorhergehenden Ansprüche, wobei der bewegliche Anker (13) beim Zurückfallen in seine Ruheposition frei ausschwingen kann.

5. Verfahren gemäß einem der Ansprüche 1 bis 3, wobei der bewegliche Anker (13) fest mit dem Ventilelement gekoppelt ist und beim Zurückfallen in seine Ruheposition fest aufschlägt, während das Ventilelement in seinen Ventilsitz fällt.

6. Verfahren gemäß einem der vorhergehenden Ansprüche wobei der bewegliche Anker (13) und/oder der Stator (11) zur Unterstützung der Ausbildung von Wirbelströmen (16) Kurzschlussringe aufweist.

7. Ventil mit einem beweglichen Ventilglied welches zum Öffnen und Schließen des Ventils mit einem Ventilsitz zusammenwirkt, sowie mit einem Spulenantrieb (10), welcher umfasst:

   - einen elektromagnetischen Stator (11) mit einer Erregerspule (12)
   - und einen beweglichen Anker (13), welcher in einer Ruheposition von dem Stator (11) beabstandet ist, und mit dem beweglichen Ventilglied derart gekoppelt ist, dass er bei einem Ankerhub ein Öffnen des Ventils bewirkt, indem er das Ventilglied aus dem Ventilsitz hebt;
   das Ventil weist ferner auf:
   - eine Regelungseinheit zum zeitlich begrenzten Einprägen einer elektrischen Spannung in die Erregerspule (12) zur Erzeugung eines Erregerstromes durch diese, wobei der Erregerstrom (14) eine Anziehung des bewegliche Ankers (13) unter Bildung eines Ankerhubes verursacht, wodurch das Ventilglied aus seinem Ventilsitz gehoben wird,
- Mittel zum Abtasten und Auslesen des Spannungsverlaufs (U(t)) an der Erregerspule (12) über die Zeit in Form von Wertepaaren (t(k); U(k)) mit jeweils einem Zeitwert (t(k)) und einem Spannungswert (U(k))nachdem der Erregerstromes (14) auf Null abgeklungen ist,
- eine Auswerteinheit zum Transformieren der erfassten Spannungswerte und Zeitwerte durch Logarithmusbildung $x(k):=logb_t(k)$ und $y(k) :=c \cdot log_b U(k)$ mit einer Basis b und einer Konstante c, zur Bildung einer transformierten Funktion y(x) mit Wertepaaren (x(k);y(k)) und anschließendem numerischen Ableiten der transformierten Funktion unter Bildung einer Ableitungsfunktion $\delta\{x\} := \frac{\Delta y\{x\}}{\Delta x};$

- sowie zum Erkennen eines dem Schließzeitpunkt $t_{close}$ des Ventils entsprechenden transformierten Zeitwertes $x_{close}$ anhand der Ableitungsfunktion an einer Unterschreitung $\delta(t_{close}) \leq S(x)$ eines vorbestimmten Schwellwerts S(x); und zur
- Berechnung des Schließzeitpunktes $t_{close}$ durch Rücktransformation $t_{close} = b^{x_{dare}}$.

8. Ventil gemäß Anspruch 7, wobei der bewegliche Anker (13) beim Zurückfallen in seine Ruheposition ausschwingen kann.

9. Ventil gemäß Anspruch 7, wobei der bewegliche Anker (13) fest mit dem Ventilelement gekoppelt ist und beim Zurückfallen in seine Ruheposition fest aufschlägt, während das Ventilelement in seinen Ventilsitz fällt.

10. Ventil gemäß einem der Ansprüche 7 bis 9, wobei der bewegliche Anker (13) und/oder der Stator (11) zur Unterstützung der Ausbildung von Wirbelströmen (16) Kurzschlussringe aufweist.

11. Ventil gemäß einem der Ansprüche 7 bis 10, das ein Einspritzventil für eine Brennkraftmaschine ist.

**Claims**

1. Method for detecting a closing time point of a valve having a coil drive (10) and having a movable valve element which interacts with a valve seat in order to open and close the valve, wherein the coil drive (10) comprises:

    - an electromagnetic stator (11) with a field coil (12)
    - and a movable armature (13) which is spaced apart from the stator (11) in an inoperative position and is coupled to the movable valve element in such a way that it causes the valve to open in the event of an armature movement by lifting the valve element out of the valve seat; comprising the steps of:
    - impressing an electrical voltage into the field coil (12) for a limited time in order to generate a field current (14) through said field coil, as a result of which the movable armature (13) is attracted so as to form an armature movement and lifts the valve element out of its valve seat,
    - allowing the field current (14) to decay to zero,
    - then sampling and reading out the voltage profile (U(t)) across the field coil (12) with respect to time in the form of value pairs (t(k); U(k)) which each comprise a time value (t(k)) and a voltage value (U(k));
    - transforming the identified voltage values and time values by forming a logarithm x (k) :=$log_b$t(k) and y(k):=c·$log_b$(U(k)) with a base b and with a constant c in order to form a transformed function y(x) comprising value pairs (x(k); y(k));
    - then numerically deriving the transformed function so as to form a derivative function

$$\delta(x) := \frac{\Delta y(x)}{\Delta x};$$

    - detecting a transformed time value $x_{close}$, which corresponds to the closing time point $t_{close}$ of the valve, on the basis of the derivative function of a predetermined threshold value S (x) being undershot $\delta(x_{close}) \leq S(x)$ ;
    - calculating the closing time point $t_{close}$ by back-transformation $t_{close} = b^{*close}$.

2. Method according to Claim 1, wherein the value pairs (t(k); U(k)) which each comprise a voltage value (U(k)) and a time value (t(k)) are determined using an oversampling method.

3. Method according to Claim 1, wherein the value pairs (x(k); y(k)) of the transformed function y(x) are determined using an oversampling method.

4. Method according to one of the preceding claims, wherein the movable armature (13) can swing out freely when it falls back into its inoperative position.

5. Method according to one of Claims 1 to 3, wherein the movable armature (13) is fixedly coupled to the valve element and strikes firmly when it falls back into its inoperative position, while the valve element falls into its valve seat.

**6.** Method according to one of the preceding claims, wherein the movable armature (13) and/or the stator (11) have/has short-circuiting rings in order to assist in the formation of eddy currents (16).

**7.** Valve having a movable valve element which interacts with a valve seat in order to open and close the valve, and also having a coil drive (10) which comprises:

- an electromagnetic stator (11) with a field coil (12)
- and a movable armature (13) which is spaced apart from the stator (11) in an inoperative position and is coupled to the movable valve element in such a way that it causes the valve to open in the event of an armature movement by lifting the valve element out of the valve seat; the valve also has:
- a control unit for impressing an electrical voltage into the field coil (12) for a limited time in order to generate a field current through said field coil, wherein the field coil (14) attracts the movable armature (13) so as to form an armature movement, as a result of which the valve element is lifted out of its valve seat,
- means for sampling and reading out the voltage profile (U(t)) across the field coil (12) with respect to time in the form of value pairs (t(k); U(k)) which each comprise a time value (t(k)) and a voltage value (U(k)) after the field current (14) has decayed to zero;
- an evaluation unit for transforming the identified voltage values and time values by forming a logarithm $x(k):=\log_b t(k)$ and $y(k):=c\cdot\log_b U(k)$ with a base b and with a constant c in order to form a transformed function y(x) comprising value pairs (x(k); y(k)) and then numerically deriving the transformed function so as to form a derivative function $\delta(x):=\dfrac{\Delta y(x)}{\Delta x}$ ;

- and also in order to detect a transformed time value $x_{close}$, which corresponds to the closing time point $t_{close}$ of the valve, on the basis of the derivative function of a predetermined threshold value S (x) being undershot $\delta(x_{close}) \leq S(x)$ ; and in order to
- calculate the closing time point $t_{close}$ by back-transformation $t_{close} = b^{*close}$.

**8.** Valve according to Claim 7, wherein the movable armature (13) can swing out when it falls back into its inoperative position.

**9.** Valve according to Claim 7, wherein the movable armature (13) is fixedly coupled to the valve element and firmly strikes when it falls back into its inoperative position, while the valve element falls into its valve seat.

**10.** Valve according to one of Claims 7 to 9, wherein the movable armature (13) and/or the stator (11) have/has short-circuiting rings in order to assist in the formation of eddy currents (16).

**11.** Valve according to one of Claims 7 to 10 which is an injection valve for an internal combustion engine.

**Revendications**

**1.** Procédé pour reconnaître un instant de fermeture d'une soupape présentant un entraînement par bobine (10), comportant un élément de soupape mobile, qui pour l'ouverture et la fermeture de la soupape coopère avec un siège de soupape, l'entraînement par bobine (10) comprenant :

- un stator électromagnétique (11), pourvu d'une bobine d'excitation (12),
- et un induit mobile (13), qui en position de repos se trouve à une certaine distance du stator (11), et qui est couplé à l'élément de soupape mobile de façon à provoquer une ouverture de la soupape lors d'une course de l'induit, par le fait qu'il soulève l'élément de soupape à partir du siège de soupape ;
comportant les étapes suivantes :

- application, limitée dans le temps, d'une tension électrique à la bobine d'excitation (12) pour produire un courant d'excitation (14) à travers cette bobine, ce en conséquence de quoi l'induit mobile (13) est attiré avec formation d'une course d'induit, et soulève l'élément de soupape de son siège de soupape,
- ramenée du courant d'excitation (14) à zéro,
- puis échantillonnage et lecture de l'évolution de la tension (U(t)) sur la bobine d'excitation (12) dans le temps, sous forme de paires de valeurs (t(k) ; U(k)), chacune étant constituée d'une valeur de temps (t(k)) et d'une valeur de tension (U(k)) ;
- transformation des valeurs de tension et des valeurs de temps détectées, par formation de logarithmes $x(k):=\log_b t(k)$ et $y(k):=c.\log_b(U(k))$ de base b et de constante c, pour la formation d'une fonction transformée y(x) avec les paires de valeurs (x(k);y(k)) ;
- puis dérivation numérique de la fonction transformée, pour former une fonction dé-

rivée

$$\delta(x) := \frac{\Delta y(x)}{\Delta x};$$

- détection d'une valeur de temps $x_{close}$ transformée, qui correspond à l'instant de fermeture $t_{close}$ de la soupape, du fait que la fonction dérivée passe en-dessous d'une valeur seuil prédéterminée S(x), à savoir

$$\delta(x_{close}) \leq S(x)$$

- calcul de l'instant de fermeture $t_{close}$ par transformation en retour $t_{close} = b^*_{close}$.

**2.** Procédé selon la revendication 1, dans laquelle les paires de bases (t(k);U(k)), chacune étant constituée d'une valeur de tension (U(k)) et d'une valeur de temps (t(k)) sont déterminées par une méthode de suréchantillonnage.

**3.** Procédé selon la revendication 1, dans lequel des paires de valeurs (x(k);h(k)) de la fonction transformée y(x) sont déterminées par une méthode de suréchantillonnage.

**4.** Procédé selon l'une des revendications précédentes, **caractérisé en ce que** l'induit mobile (13) peut s'échapper librement par oscillation lors de son retour dans la position de repos.

**5.** Procédé selon l'une des revendications 1 à 3, dans lequel l'induit mobile (13) est fermement couplé à l'élément de soupape et, lors de son retour dans sa position de repos, va le heurter fermement, tandis que l'élément de soupape tombe dans son siège de soupape.

**6.** Procédé selon l'une des revendications précédentes, dans lequel l'induit mobile (13) et/ou le stator (11) comprennent, pour faciliter la constitution de courants de Foucault, des anneaux de court-circuit.

**7.** Soupape comportant un élément de soupape mobile, qui coopère avec un siège de soupape pour l'ouverture et la fermeture de la soupape, et comportant un entraînement à bobine (10), qui comprend

  - un stator électromagnétique (11), pourvu d'une bobine d'excitation (12),
  - et un induit mobile (13), qui en position de repos se trouve à une certaine distance du stator (11), et qui est couplé à l'élément de soupape mobile de façon à provoquer une ouverture de la soupape lors d'une course de l'induit, par le fait qu'il soulève l'élément de soupape à partir du siège de soupape ;

la soupape comprenant en outre :

  - une unité de régulation, pour appliquer d'une manière limitée dans le temps une tension électrique à la bobine d'excitation (12) pour produire un courant d'excitation à travers cette dernière, le courant d'excitation (14) provoquant une attraction de l'induit mobile (13) avec formation d'une course d'induit, ce en conséquence de quoi l'élément de soupape est soulevé de son siège de soupape,
  - des moyens pour échantillonner et lire le profil de tension (U(t)) au niveau de la bobine d'excitation (12) dans le temps sous forme de paires de valeurs (t(k);U(k)), chacune étant constituée d'une valeur de temps (t(k)) et d'une valeur de tension (U(k)) après que le courant d'excitation (14) est tombé à zéro,
  - une unité d'évaluation pour la transformation des valeurs de tension et des valeurs de temps détectées, par formation de logarithmes x (k): $=\log_b t(k)$ et y (k): $=c.\log_b U(k)$ de base b et de constante c, pour la formation d'une fonction transformée y(x) comprenant les paires de valeurs (x(k);y(k)), puis dérivation numérique de la fonction transformée, avec formation d'une fonction dérivée

$$\delta(x) := \frac{\Delta y(x)}{\Delta x};$$

  - et aussi pour reconnaître une valeur de temps $x_{close}$ transformée, correspondant à l'instant de fermeture $t_{close}$ de la soupape, par le fait que la fonction dérivée passe en-dessous d'une valeur seuil prédéterminée S(x), $\delta(x_{close}) \leq S(x)$ ;
  - et, pour le calcul de l'instant de fermeture $t_{close}$ par la transformation en retour $t_{close}=b^*_{close}$.

**8.** Soupape selon la revendication 7, dans laquelle l'induit mobile (13) peut s'échapper par oscillation lors de son retour à sa position de repos.

**9.** Soupape selon la revendication 7, dans laquelle l'induit mobile (13) est fermement couplé à l'élément de soupape et est configuré de façon à le heurter fermement lors de son retour dans sa position de repos, pendant que l'élément de soupape tombe dans son siège de soupape.

**10.** Soupape selon l'une des revendications 7 à 9, dans lequel l'induit mobile (13) et/ou le stator (11) comportent des anneaux (16) de court-circuit pour faciliter la constitution de courants de Foucault.

**11.** Soupape selon l'une des revendications 7 à 10, qui est une soupape d'injection pour un moteur à combustion interne.

# FIG 1

**FIG 2A**

**FIG 2B**

**FIG 2C**

# FIG 3A

# FIG 3B

## FIG 4A

## FIG 4B

## FIG 4C

## FIG 4D

## FIG 4E

## FIG 4F

# FIG 4G

# FIG 4H

# FIG 5A

# FIG 5B

## FIG 5C

## FIG 5D

## FIG 5E

## FIG 5F

## FIG 5G

## FIG 5H